Europäisches Patentamt

European Patent Office

Office européen des brevets

(11) Publication number: **0 350 764**
**A1**

(12) # EUROPEAN PATENT APPLICATION

(21) Application number: **89112148.5**

(22) Date of filing: **03.07.89**

(51) Int. Cl.⁴ **B60H 1/32 , F25B 17/08**

(30) Priority: **12.07.88 IT 8561388**

(43) Date of publication of application:
**17.01.90 Bulletin 90/03**

(84) Designated Contracting States:
**ES GR**

(71) Applicant: **Spiller, Pierangelo**
**Via Mure Porta Castello, 15**
**I-36100 Vicenza(IT)**

Applicant: **Cappellato, Chiara**
**Via Mure Porta Castello, 15**
**I-36100 Vicenza(IT)**

(72) Inventor: **Spiller, Pierangelo**
**Via Mure Porta Castello, 15**
**I-36100 Vicenza(IT)**

(74) Representative: **Bonini, Ercole**
**c/o STUDIO ING. E. Bonini SAS 8 Corso**
**Fogazzaro**
**I-36100 Vicenza(IT)**

(54) **Refrigerating system for air conditioning on vehicles.**

(57) A refrigerating absorption system which is mounted on vehicles with internal combustion engines utilizes the exhaust gas of the engine as a source of heat. In a preferred embodiment of the invention the system comprises two reaction pots (1,2) which are heated by the exhaust gas when these operate as generators, and they are cooled by the air when they act as absorbers; each of these reaction pots contains a solid absorber impregnated with an absorbed fluid (gaseous or liquid) which circulates, when the reaction pots is heated, within a sealed circuit (10,20) consisting of a condenser (11,21) and an evaporator (14,23). The evaporator absorbs heat from a fluid (13) which is utilized as a cooling unit. A reaction pot operates as a generator when a valve (3), which intercepts the exhaust gas of the vehicle, deviates that gas into the above-mentioned reaction pots, otherwise the reaction pots operates as an absorber. The refrigerated fluid (13), through pipes (40,42), reaches the vehicle radiator (38) communicating with the interior of compartment vehicle and produces the cooling.

FIG.1

## REFRIGERATING SYSTEM FOR AIR CONDITIONING ON VEHICLES.

The invention consists of a refrigerating system expecially for vehicles which utilize internal combustion engines as means of transport.

The conditioning of cars, lorries and all sorts of vehicles, has been increasingly developing all over the world and people have been considering it less and less as a luxury accessory and more and more as a real need to be able to drive so safely to avoid any accidents due to not very good physical condition, to tiredness and consequent retarded reflex actions.

Consequently, some countries have considered the vehicle conditioner as an element of active safety and that some other with hot weather, like Israel, have planned to make it compulsory.

All the conditioners presently in use on vehicles produce the cooling utilizing the so-called compression cycle which consists of the compression of a cooling fluid through a mechanical compressor and the expansion and condensation of it in subsequent phases in order to obtain the cooling effect of a second fluid in contact with the cryogenic fluid.

In substance, the present conditioners consist of a compressor which is mechanically coupled to the vehicle engine through belts or other system. The compressor therefore, takes mechanic power from the engine but, for this reason, it has a number of disadvantages.

The first disadvantage is to subtract mechanic power from the engine in a not negligible amount; generally a vehicle compressor subtracts about 5 horse power (H.P.) which means 8-10% of the engine power of an ordinary powered car. Since the power subtracted by the compressor is uniform, it is easily deducible that the power of 5 H.P. may even mean an absorption of 40-60% of the power provided by the engine when idling.

To overcome this advantage, cars are provided with the so-called fuel enrichers which necessarily increase the fuel consumption of the vehicle at low revs in order to maintain the functioning of the engine at low revs and, at the same time, the functioning of the compressor.

The input of mechanic power made by the compressor of the conditioner therefore involves an increase of fuel consumption so, in order to maintain the same speed, an increase of the power provided by the engine will be necessary.

Besides, when the vehicle accelerates or overtakes another vehicle, it lacks of the maximum power because of the power subtracted by the compressor and this fact reduces the safety margin of the vehicle.

As regard to the cost, compressors for air conditioners are expensive enough depending of the conception of their construction and also depending of the difficult and expensive maintenance due to the presence of rotating parts which are delicate because of their own structure and also because they are mounted on vehicles with vibrations that do not permit long life to the parts they are made of. As a consequence of this, the conditioners mounted on vehicles need a specific and frequent maintenance.

Another restrictive characteristic to the use and inherent to the concept of cooling through compression consists of that when the vehicle is stopped, the cooling effect stops too, since the compressor is connected to the engine. It is quite common to see parked cars with people on board who have to maintain the engine on in order to enjoy the benefit of conditioned air.

Last, but not least,the restrictions related to the subtraction of mechanic power from the vehicle engine and the high cost of the conditioning plant, allow the use of it only in high-powered cars as well as in industrial vehicles such as lorries. Therefore the conditioner is not mounted on vehicles which represent large demand in the market.

The aim of invention is to overcome the disadvantages mentioned above.

The first purpose of the invention is to provide vehicles with a conditioning system which does not utilize the mechanic power of the vehicle engine for its own functioning.

Another purpose of the invention is to give the opportunity to maintain the cooling effect for a certain period even after the engine stop.

Another purpose is to carry out a conditioning system very simple, made of a restricted number of parts and having a very low manufacturing and mounting cost, so to be easily used by a wide range of users.

All the above-mentioned points, together with others that we will explain in detail later, are achieved through an absorption refrigerating system, expecially for vehicles with internal combustion engines where this refrigerating absorption system utilizes the exhaust gas of the engine as a heating source.

According to the patent claims, said system comprises a sealed circuit with:
- at least a first reaction pot (1, 2) operating as generator, and, eventually, also as absorber, comprising a selled container, wherein there is an absorber solid material, inside which is impregnated an absorbed fluid (gaseous or liquid);
- at least a sealed cooling liquid (10, 20) connected with the reaction pot (1, 2), comprising at least a condenser (11, 21) and an evaporator (14, 23),
- a fluid (13) giving heat to the refrigerating circuit (10,20) and circulating in a radiator (38),
characterized in that the reaction pot (1, 2) of said refrigerating absorption system, mounted in vehicle, uses as heating source the exhaust gas of the engine when this reaction pots operates as generator, being provided means for checking the temperature, the pressure and the pH of the said refrigerating absorption system.

In a preferred embodiment of the invention, there are two reaction pots which are heated by the exhaust gas when these operate as generators and cooled down by the air when acting as absorbers. Each of these reaction pots contains a solid absorber impregnated with an absorbed fluid (gaseous or liquid) of low boiling temperature and high heat of evaporation. The fluid circulates within a sealed circuit consisting of a condenser and an evaporator. The evaporator absorbs heat from a heating exchange unit consisting of another fluid which is utilized as a cooling unit.

In the same embodiment of the invention there is a valve which intercepts the exhaust gas of the vehicle and alternatively deviates the exhaust into pipes that pass through the reaction pots when they operate as generators, while through the same valve, cooling air is pushed into the pipes that pass through the reaction pots when they operate as absorbers. The valve is obviously provided with a control system. The pressure and the temperature of the reaction pots and also the pH of the cooled fluid are checked by checking means connected with the unity control of the system.

The most obvious advantage of the invention arises, by utilizing an absorption cycle for the refrigerating cycle where the necessary heat is provided by the exhaust gas, the refrigerating system operates without absorption of mechanical power from the engine.

A second advantage coming from the use of an absorption cycle is that the refrigerating cycle continues for a certain period providing the conditioning even when the engine is off.

A third advantage is that the volume decreases of the vehicle exhaust gas due to the fact that part of the heat is given to the generating unit of the refrigerating system. Besides, the temperature drop of the exhaust gas causes a percentage decrease of carbon monoxide put into the atmosphere: a consequence to this is the decrease in toxic power of the combustion waste.

The volume decrease of the exhaust gas also reduces the noise and the acoustic pollution that it causes.

Besides, as it can be seen later on, the inlet of cool air into the vehicle exhaust gas during part of the cycle, allows an oxidation of the unburnt gas and, therefore, a decrease of toxicity of the gas itself.

The refrigerating system is based on the function principle of Kleen's device which essentially consists of two intermittent operating reaction pots, operating with a solid absorber and connected in such a way to form one machine suitable to supply a continuous refrigerating effect.

The two reaction pots, are containers with a solid absorber inside which is impregnated with an absorbed fluid (gaseous or liquid), and are connected to a sealed circuit which includes a condenser and an evaporator.

When the generator is heated by an external source of heat, the absorbed fluid separates from the absorber through evaporation; then it will condense and expand again absorbing heat from a refrigerating fluid.

When all the absorbed fluid evaporates from the generator, the process stops in the first reaction pot, and the second reaction pot starts operating as a generator to continueg on the refrigerating process. In the meanwhile the first generator starts operating as an absorber, so that the fluid formerly separated from the solid absorber goes back to amalgamate again with it in order to reestablish the first phase of functioning. During this re-absorption phase of the formerly evaporated fluid, the reaction pots dealing with the process is cooled down in order to facilitate and to speed up the absorption process.

One of the solid absorbers which may be advantageously used to carry out the cycle of the invented refrigerating system is the calcium chloride which mixes with the ammonia, acting as an absorbed. Other solid absorbers can be the lithium chloride or the magnesium chloride which mix with the absorbed methylamine. Another absorber can be the activated carbon which mixes with the absorbed methanol.

Further characteristics and peculiarities of the invention will be better evident in the description of a preferred way of carring out the invention given by way of example, but not restrictive and shown in the enclosed figures where:

- Fig. 1: Schematically shows the refrigerating system of the invention with a reaction pot operating as a generator and a second, connected to the other, operating as an absorber;

- Fig. 2: Shows the refrigerating system of the invention with the inverted function between generator and absorber in the two reaction pots;

- Fig. 3: Schematically shows the refrigerating system of the invention when the two machines are off;

- Fig. 4: Shows how the refrigerating system can be connected to a car cooling circuit.

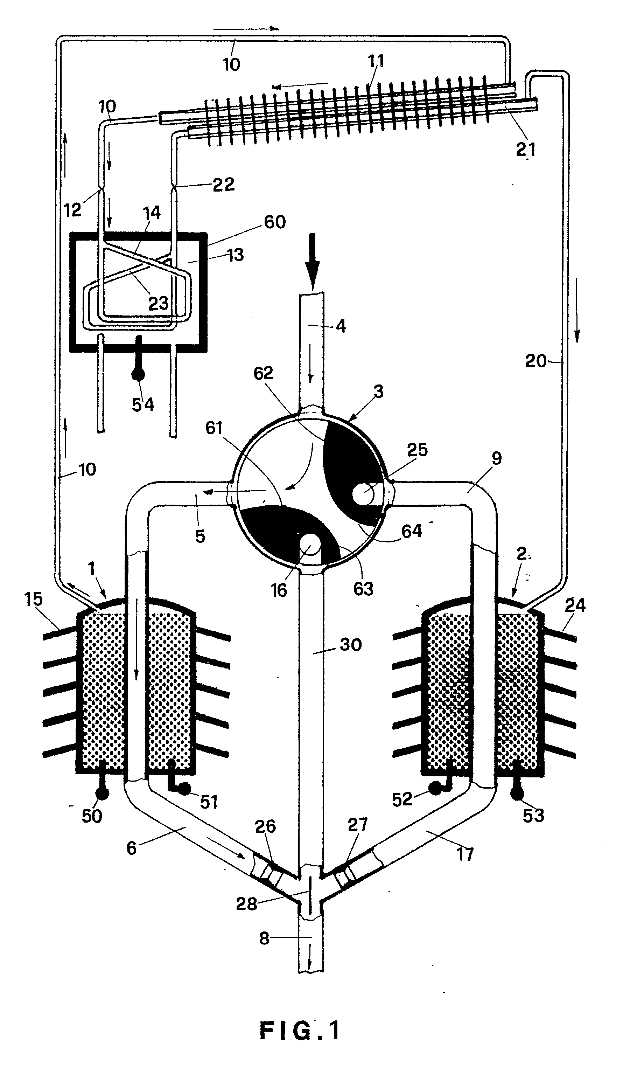

With reference to fig.1 it can be seen that the refrigerating system of the invention is essentially made of two reaction pots 1, 2 alternatively operating as a generation pot and as an absorption pot, depending on the canalization of the exhaust gas forced into them by valve 3. The system consists of a couple of sealed circuits in which the absorbed fluid, responsible for the refregerating effect, circulates.

With reference to fig.1 and with specific mention to the position of valve 3, you can note that pipe 4, which contains the combustion exhaust gas of the endothermic engine, is connected to pipe 5 which, going through the reaction pot 1, is furtherly connected to outlet pipe 6 and, then, to outlet terminal exhaust pipe 8.

Inside the generator 1, which essentially consists of a sealed box 1 connected to the closed circuit pipe 10, there is a solid absorber material (in the example it is the calcium chloride in powdery form) and an absorbed part (in the example it is the ammonia).

At room temperature, that is to say when the engine is off, the ammonia is absorbed by the calcium chloride and constitutes a stable solution.

For that reason all the ammonia is absorbed and fixed by the solid part of calcium chloride.

The same process takes place in the reaction pot 2 which also contains the calcium chloride and the ammonia of equal amount and proportions of reaction pot 1.

As we already said, with valve 3 on the position shown in fig. 1, the exhaust gas of the internal combustion engine is deviated through pipe 5 and, then, into the generator, that is the reaction pot 1.

In such a way the absorbed part (i.e. the ammonia) is heated and begins to evaporate through the sealed pipe 10. Therefore the ammonia, which goes up through pipe 10, increases its pressure and its temperature, because of the heating of the reaction pot supplied by the exhaust gas which passes through.

When this ammonia goes through the temperature condenser 11, it becomes liquid, and goes out of the condenser to pass through the capillary bottle-neck 12. Then it expands in the closed circuit area 14 pertaining to line 10.

In such a way the ammonia, which before passing through the bottle-neck 12 was liquid, evaporates by expanding in 14 and by absorbing a great amount of heat supplied by the fluid 13 which is holded in the container 60 and in which the terminal part 14 of pipe-line 10 is immersed. The fluid 13, which transfers heat to the ammonia, can advantageously be the same kind of the one used for the engine cooling (i.e. distilled water mixed with glycole-ethylene or the like). From this fluid, once it has been suitably canalized, you can obtain the car conditioning effect, as described later on.

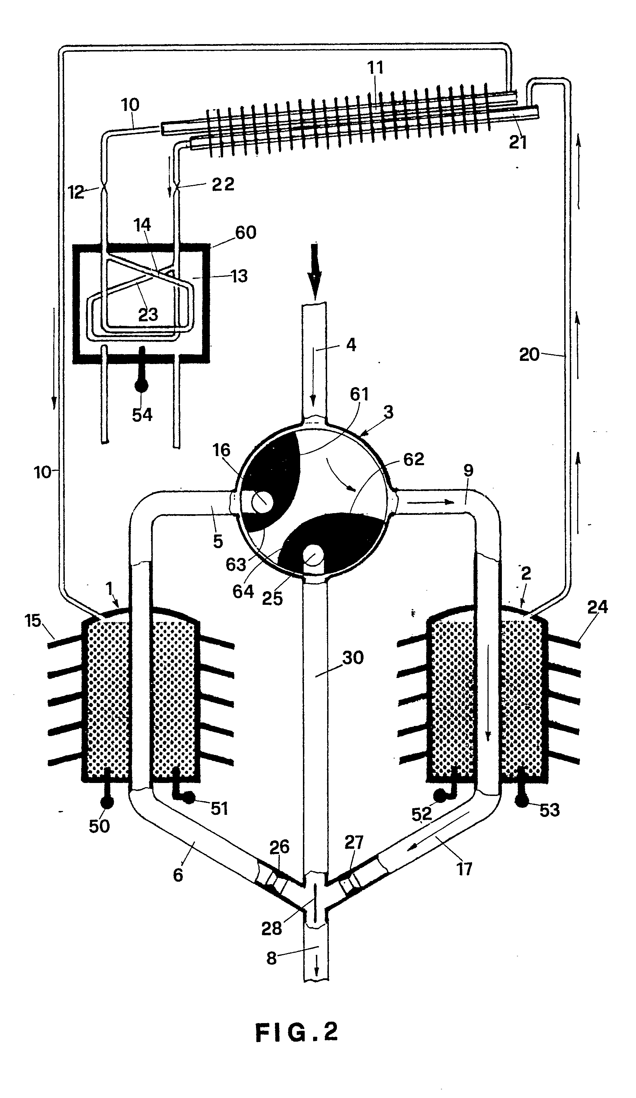

The process so far described with respect to the reaction pot 1 stops when all the ammonia, contained as an absorbed part by the calcium chloride of the reaction pot 1, is evaporated. In such a condition the temperature, which has been nearly uniform inside the reaction pot 1, increases and its increase is a signal for thermic sensor 50. The sensor operates a control system which rotates valve 3 into the position shown in fig. 2.

In this condition, the exhaust gas coming from pipe 4 does not pass through pipe 5 but is driven into pipe 9 in order to pass through the reaction pot 2 and starts heating it which now will operates as generator in the same procedure which has been earlier on described with respect to generator 1.

To better understand the function of the refrigerating system of the invention you would better follow what happens to the reaction pot 1 in the phase shown in fig. 2 where the exhaust gas does not pass through the reaction pot 1 anymore.

In this case, the cooling of generator 1 clearly begins, thanks to both the presence of fins 15 in the outside part of the generator 1 and the position of valve 3 which, as shown in fig. 2, allows the inlet of outside cool air into line 5 through hole 16. Therefore the cooling of the reaction pot 1 is the result of the combined action of the passing of cool air from hole 16 through line 5 and the loss of heat caused by fins 15.

Of course the cooling of the reaction pot 1 causes a pressure fall in line 10 and, consequently, the liquid ammonia present in it to be drawn into the reaction pot 1, which is responsible for a further pressure fall and, therefore, a complete passing of the ammonia from the evaporation unit into the reaction pot itself.

As referred, also the reaction pot 2, put into operation activated by the exhaust gas going, through line 9 first, and then through line 17, into terminal line 8, causes the ammonia to evaporate into sealed line circuit 20. This evaporation is followed by the condensation of the ammonia itself in the condenser 21 and its subsequent evaporation after passing from the condenser 21, through the capillary restricter 22, into the closed circuit 23 which is immersed in the refrigerating fluid 13.

You can see how the refrigerating fluid 13, by the valve shifting from the position in fig. 1 into the position in fig. 2, keeps on being refrigerated by the generator 2 instead by the ammonia evaporated from the generator 1.

Once the ammonia of the reaction pot 2 has completely evaporated,the high temperature, which will be generated in the reaction pot itself, will send a signal to the thermic sensor 52. The control sistem of the conditioner will shift valve 3 from the position in fig. 2 back to the position in fig.1. It is clear that, while the reaction pot 1 is operating, the reaction pot 2 cools down (as we earlier on said for the reaction pot 1) as result of both the combined action of the fins 24 in the outside part of the reaction pot 2 and of the cool air driven from the hole 25 into line 9, as shown in fig. 1.

You can note how, when the reaction pot 1 operates as a generator and the reaction pot 2 as an absorber (fig. 1) and when the reaction pot 2 operates as a generator and the reaction pot 1 as an absorber (fig. 2), the outlet gas from line 8 will be furtherly enriched with air. In effect, as shown in fig. 1, the exhaust gas coming from line 6 will be enriched with the cooling air contained in line 17. On the other hand, during the phase shown in fig. 2, the exhaust gas coming from line 17 will be now enriched with the cooling air contained in line 6.

This fact is responsible for a further oxidation of the exhaust gas and, therefore, for a better quality of it with respect to the lower toxicity.

Besides, it is evident how the exhaust gas in line 8 is at a lower temperature than the one it would be if it came out directly without any subtraction of thermic energy. The effect of this is the lowering of carbon monoxide and an increase of carbon dioxide which means an obvious improvement of the environmental health.

In order to improve the gas outlet, lines 6 and 17 are provided with two Venturi tubes (marked 26 and 27) which facilitate the gas ejection by accelerating the outlet speed in line 8. In order to prevent a gas recycle within lines 5 and 9, there is a screen marked 28 at the confluence of lines 6 and 17 in line 8.

You can easily deduct how the refrigerating cycle may be repeated an indefinite number of times only through shifting valve 3 in such a way that the two reaction pots alternatively operate as a generator or an absorber and vice versa.

You can also easily deduct how the refrigerating effect can continue for a certain (and not negligible) period even when the endothermic engine is off; in fact, the thermic flywheel, accumulated by the absorber part, for a while continues to produce the evaporation of the absorbed part (in the example it is the ammonia) so that the just- described refrigerating effect continues.

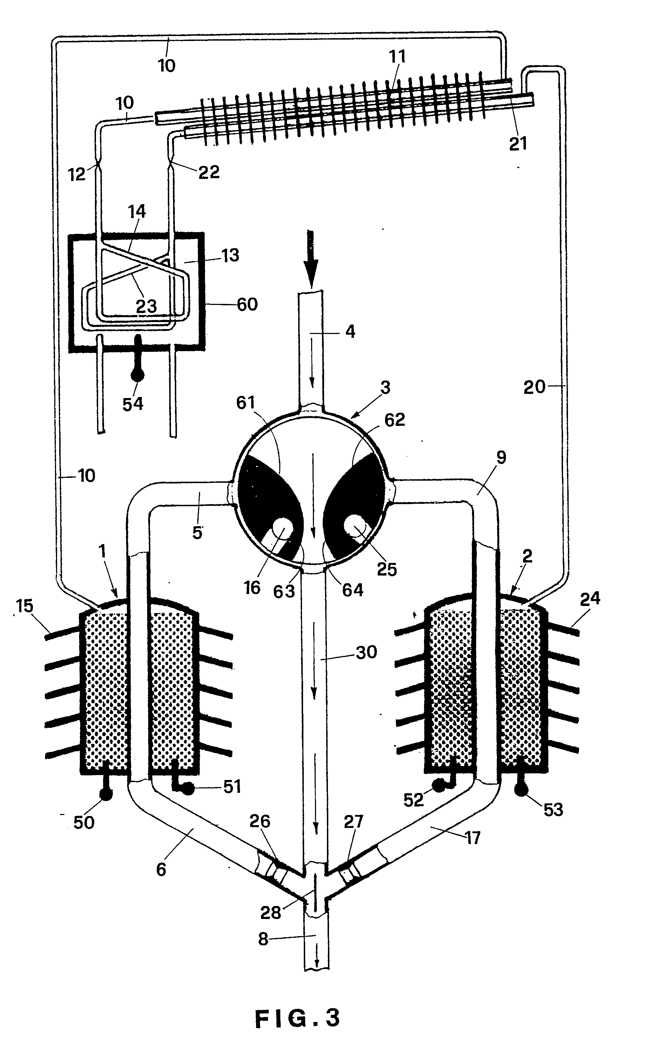

When you want to isolate the refrigerating circuits, for example during in winter times, it is sufficient to shift valve 3 on the position shown in fig. 3.

Line 4 is so directly connected to tube 30 and terminal outlet tube 8 without involving tubes 5 and 9, which heat the reaction pots 1 and 2. In fact, the position of valve 3 doesn't permit the comunication with lines 5 and 9 and all of the exhaust gas go through tube 30 directly in the terminal outlet part 8.

In such a way the reaction pots 1 and 2 do not operate and all the absorbed fluid (in the example it is the ammonia) remains with the solid absorber part (in the example it is the calcium chloride).

As we have already said, the ammonia can be subtituted with other components which have equal characteristics, that is to say a low boiling temperature at normal pressure and a very high evaporation heat.

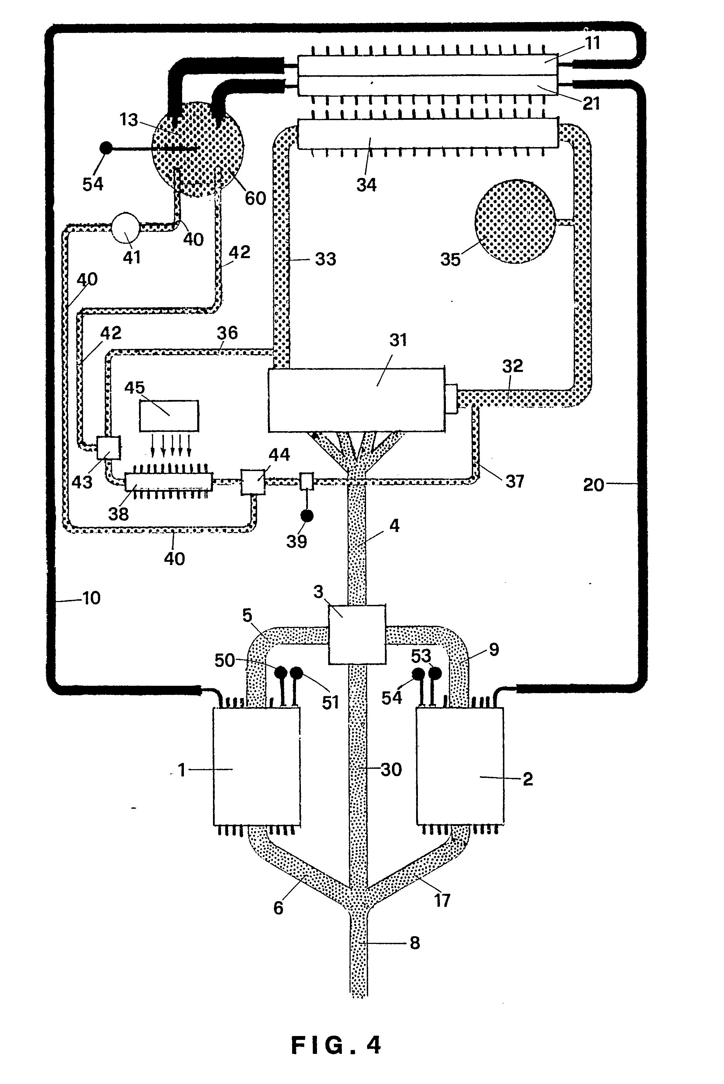

Fig. 4 shows how the refrigerating system of the invention is connected to an internal combustion engine motor vehicle. More particularly you can note that the motor vehicle engine 31 is cooled by the refrigerating circuit 32 and 33 which includes a radiator 34 and an expansion chamber 35.

To obtain the heating of the internal motor vehicle passenger compartment in winter times, part of the cooling liquid is deviated from the engine 31 through lines 36 and 37 and sent to the radiator 38 through the interception valve 39.

When the heated liquid, coming from the refrigerating circuit of the engine, passes through the radiator 38, the three-way valves 43 and 44 in the lines 36 and 37, are on such a position that, while valve 43 allows the connection between line 36 and the radiator 38 and prevents the fluid to pass through line 42, valve 44 allows the passing of the heated fluid from line 37 into the radiator 38 and prevents it to pass through line 40.

When we want to obtain the refrigeration of the vehicle, first we close the intercept valve 39, which prevents the circulating liquid to pass into the radiator (the radiator remains inert and with no heated liquid circulating in it). At the same time, through suitable controls, the electrovalves which control valves 43 and 44 are excited in such a way that valve 43 connects line 42 to the radiator 38 isolating, at the same time, line 36.

In the same way valve 44 is put on such a position to allow the connection between line 40 and the radiator 38 and to isolate line 37, on the other hand already isolated by the interception valve 39.

The refrigerated fluid circulates in lines 40 and 42 by means of a circulation pump 41. The refrigerated fluid 13, as shown in fig. 1,2,3, is refrigerated by the refrigerating effect of the invented system. You can see how the fluid 13 is in the container 60 in which coils 14 and 23 are immersed ( not shown in fig. 4). These are connected to the condensers 11 and 21 coming from lines 10 and 20 of the reaction pots 1 and 2. The refrigerating effect of the passenger compartment is facilitated by the presence of a ventilator as which brings air to the cooled radiator 38 so sending low-temperature air into the passenger compartement.

When the vehicle is off, in order to maintain the refrigerating effect due to the thermic flywheel of the reaction pot 1 or 2 operating as a generator,the recycling pump 41 and the ventilator must be keep on.

For that reason, in order to avoid an excessive loss of energy if using the vehicle battery, it could be very useful to provide the motorvehicle with a small battery of photovoltaic cells which, being fed by the sun, can directly supply the power that the pump and the ventilator (both low-powered ones) need.

Both the reaction pot 1 and the reaction pot 2 are provided with temperature and pressure sensors which are connected to a central system in order to check the good operating of the plant. In particular, the reaction pot 1 has a temperature sensor 50 connected to the central control system pressure sensor marked 51, in the same way the reaction pot 2 has the temperature sensor 52 and the pressure sensor 53. The temperature sensors, which are set at a predetermined temperature, determine the release of the operator which controls valve 3 rotation in such a way to change the connections between the exhaust tube 4 and line 5, 9 and 30. So, when for example in the reaction pot 1 there is a certain temperature due to the end of the evaporation of the absorbed fluid, the temperature increase, identified by the sensor 50 and sent to the central control system, causes the valve to rotate in such a way that its position changes from the one shown in fig. 1 to the ne shown in fig. 2. This change transforms the reaction pot 2 from an absorber into a generator. Similarly, the thermic sensor 52, after identifying a certain temperature level in the reaction pot 2, operates the rotation of valve 3 to the previous position as shown in fig. 1.

Also the sensor 51 and 53, which control the pressure of the absorbed fluid in the reaction pots, check the good operating of the plant. In case of excessive pressure, they shift valve 3 to the position of direct gas (exhausting), so isolating reaction pots 1 and 2.

Even in case of a pressure fall beyond a certain limit, the pressure sensors 51 and 53 transmit the information to the central control system which gives the alarm signal, since the pressure fall is presumably caused by a fluid leak in the circuit of the refrigerating plant.

Another controllor of possible leaks of ammonia is placed in the container 60 of the refrigerating fluid 13; the leak is detected by a sensor 54 which controls the pH of the fluid 13 or its electric conducivity.

During the manufacturing and, above all, in the mounting of the refrigerating plant on a motor vehicle, some peculiarities are to be kept into consideration.

First of all, with respect to the reaction pots 1 and 2, they are to be provided with outside fins in order to facilitate the cooling, as already said.

Moreover, inside each of the reaction pots 1 and 2 there may be a series of parallel lines instead of only one, so to increase the exchange area between the lines heated by gas and the solution inside the reaction pot.

A third care is to be taken in manufacturing the reation pots. Since they are placed under the motor vehicle body, they are to be of a sufficiently short height dimension in order not to cause incidental gaze or impact with the ground.

With respect to vibrations, which clearly concern the system mounted on a vehicle, some flexible joints are to be provided in order to prevent tension which may be responsible for breakage.

As regards the construction of valve 3 which connects several branches of the outlet system, you can see there are two surfaces 61 and 62 that have a big connected hollow. In such a way the outlet of smoke, from line 4 to line 5 or to line 9, is made easier. As concern valve 3 position in the refrigerating system (see fig. 3) you can note that the connecting unit (63, 64) are useful in order to assure the direct exhaust of smoke from line 4 to line 30.

An important care is to be taken in manufacturing valve 3. It is to be of a sufficently short height dimension in order not to cause incidental graze with the ground.

All closed circuit lines 10, 20 that form the refrigerated system have to be isolated as well as the container 60 and lines 40, 42 do.

The nominated description shows how all aims proposed are achieved by the invented refrigerating system.

In particular, it has been reached not to utilize the mechanical energy of vehicle engine for the air conditioning of the vehicle itself.

The advantage is in the fact that the said refrigerating system can be applied to low power vehicles. Besides, when the vehicle is off, the refrigerating effects are maintained on by the absorption functioning of the refrigerating system. For that reason in order to avoid an excessive waste of energy, it could be useful to provide the motor vehicle with a battery of photovoltaic cells.

Moreover the exhaust gas decrease his toxicity both for decreasign of temperature which permits the production of carbon dioxide instead of the production of carbon monoxide. After the exhaust gas becomes oxidated by the addition of the air in the terminal part of the exhaust lines.

The absorption refrigerating system completely eliminates rotative parts, except for a low power circulation pump and a ventilator that sends air to the radiator. That means a drastic cut in maintenance and, also, a sensibly reduced cost for the first installation because the circuit is mechanically poor of parts made by machine tools.

We have also seen how the central control unit (not shown in fig. ), which controls the good operating of the system, the position of the valve 3 and the opening and the closing of the three-way valves 43, 44, allows a very good elasticity of the engine (for example, leaks of refrigerating fluid of the engine and a high temperature of the circuit. It can be also provided a control system which deviates the cooled fluid from the refrigerating system directly to the refrigerating fluid into line 37 after the interception valve 39 has been opened.

In a construction phase improvements and variants could be made in order to have the best constructions, without modyifing the inventive idea specified in the following claims.

## Claims

1) The refrigerating absorption system, expecially for vehicles with internal combustion engines, comprising a sealed circuit with:
- at least a first reaction pot (1, 2) operating as generator, and, eventually, also as absorber, comprising a selled container, wherein there is an absorber solid material, inside which is impregnated an absorbed fluid (gaseous or liquid);
- at least a sealed cooling circuit (10, 20) connected with the reaction pot (1, 2), comprising at least a condenser (11, 21) and an evaporator (14, 23),
- a fluid (13) giving heat to the refrigerating circuit (10,20) and circulating in a radiator (38),
characterized in that the reaction pot (1, 2) of said refrigerating absorption system, mounted in vehicle, uses as heating source the exhaust gas of the engine when this reaction pots operates as generator, being provided means for checking the temperature, the pressure and the pH of the said refrigerating absorption system.

2) The refrigerating absorption system according to claim (1), characterized in that it comprises at least a reaction pot (1,2) which condenses the absorbed fluid in the absorber solid material by the cooling of the reaction pot (1, 2) with air.

3) The refrigerating absorption system according to claim 1), characterized in which each reaction pot (1, 2) is generator or absorber alternatively.

4) The refrigerating absorption system according to claim 3), characterized in which it comprises a second reaction pot (1,2) selectively connected to the exhaust gas or to the cooling air, by valve means, so that each reaction pot (1, 2) operates as generator when the exhaust gas passes thorough the reaction pot, and it operates as absorber when the cooling air passes through the reaction pot, being provided control means for the valve means.

5) The refrigerating absorption system according to claim 4) wherein the valve means are a valve (3) with at least an input-way (4) for the exhaust gas, at least an input-way (16,25) for the cooling air and at least three outlets (5,9,30) , each one selectively opened to collect exhaust gas in a reaction pot (1,2) when said operates as generator, or to collect the exhaust gas to the terminal outlet lines (8) when the refrigerating absorption system is off.

6) The refrigerating absorption system, according to claim 1, characterized in which the absorber part is the calcium chloride and the absorbed fluid is the ammonia.

7) The refrigerating absorption system, according to claim 1, characterized in which the absorber part is the lithium chloride or the magnesium chloride and the absorbed fluid is methylamine.

8) The refrigerating absorption system, according to claim 1, characterized in which the absorber part is the activated carbon and the fluid is methanol.

9) The refrigerating absorption system, according to claim 1, characteried in which each reaction pots (1, 2) includes one or more internal tubes connected to intake lines (5, 9) and to terminal outlet lines (6, 17) and in which each reaction pots has fins (15, 24) in the external surface.

10) The refrigerating absorption system according to claim 1) characterized in which each outlet line (6, 17), connected to the terminal outlet line (8), has a Venturi tube (26, 27) to increase the speed of exhaust gas.

11) The refrigerating absorption system, according to claim 1, characterized in which the fluid (13) refrigerated by said refrigerating system is holded into a container (60) thermally insulated, said refrigerated fluid circulating, by means of a circulation pump (41), in a radiator (38) crossed by a current of air coming from a ventilator (45) and communicating with the interior compartment of vehicle.

12) The refrigerating absorption system, according to claim 11, characterized in which the radiator (38), in which the refrigerated fluid (13) passes, is part of the heating system of the internal combustion engine, said radiator (38) being disconnected from the heating system through two three-ways valves (43, 44) when it operates as refrigerator.

13) The refrigerating absorption system, according to claim 11, characterized in which the circulation pump (41) of refrigerating fluid, the ventilator (45) operating with the radiator (38) and the control circuit are fed by the vehicle battery or by a battery of photovoltaic cells when the engine is off.

14) The refrigerating absorption system, according to claim 1, characterized in which each of the reaction pots (1, 2) are provided, at least, with a thermic sensor (50, 52) and a pressure sensor (51, 53) connected to the control system unit.

15) The refrigerating absorption system, according to claim 4, characterized in which the temperature checking system of the reaction pots (1, 2), when it operates as generator, controls the rotation of the valve (3) collecting the exhaust gas, so the reaction pot starts working as an absorber when the temperature increases more than a presected value.

16) The refrigerating absorption system, according to claim 1, characterized in that there is a sensor (54) in the container (60) of the refrigerating fluid (13) which checks the pH of the fluid or its electric conductivity, sending the alarm signal to the central control system when these paramethers are out off the pre-selected values.

**FIG.1**

**FIG.2**

**F I G . 3**

**F I G . 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 287 172 (L. HARRISON) <br> * Whole document * | 1,3,4, 15 | B 60 H 1/32 <br> F 25 B 17/08 |
| A | | 2,5,9, 11,14 | |
| X | US-A-3 828 566 (C. WETZEL) <br> * Column 4, lines 7-42; column 7, lines 5-25; figures 1-3 * | 1,3,4, 15 | |
| A | | 2,6,9, 14 | |
| A | EP-A-0 205 167 (P. MAIER-LAXHUBER) <br> * Page 7, lines 1-26; page 8, lines 5-29; figures 1-2 * | 1,3,4,9 ,11 | |
| A | US-A-2 455 401 (P. BRAUSE) <br> * Whole document * | 1-4,9 | |
| A | US-A-4 341 088 (V. MEI) <br> * Page 8, lines 5-20; figures 1,2 * | 1,6,7 | TECHNICAL FIELDS SEARCHED (Int. Cl.5) |
| A | DE-C- 630 064 (SIEMENS) <br> * Whole document * | 1,3,4 | B 60 H <br> F 25 B <br> G 01 M |
| A | US-A-2 438 105 (N. ERLAND AF KLEEN) <br> * Whole document * | 1,3-4 | |
| A | US-A-3 142 161 (S. HOUSE) <br> * column 2, lines 2-41; figures 1-2 * | 1 | |
| A | DE-A-3 111 961 (BUDERUS) <br> * Page 10, line 1 - page 11, line 3; figure 1 * | 1,16 | |

-/-

The present search report has been drawn up for all claims

| Place of search | Date of completion of the search | Examiner |
|---|---|---|
| THE HAGUE | 16-10-1989 | CZAJKOWSKI A.R. |

European Patent
Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 699 802  (T. HOTTA) <br> * Abstract; figure 1 * <br> ----- | 16 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 16-10-1989 | CZAJKOWSKI A.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................
& : member of the same patent family, corresponding
    document

EPO FORM 1503 03.82 (P0401)